**Europäisches Patentamt**

**European Patent Office**

**Office européen des brevets**

(19)

(11) Veröffentlichungsnummer : **0 326 581 B1**

(12) **EUROPÄISCHE PATENTSCHRIFT**

(45) Veröffentlichungstag der Patentschrift :
**15.04.92 Patentblatt 92/16**

(51) Int. Cl.⁵ : **G01F 3/14,** G05D 7/06

(21) Anmeldenummer : **87907742.8**

(22) Anmeldetag : **01.12.87**

(86) Internationale Anmeldenummer :
**PCT/DE87/00564**

(87) Internationale Veröffentlichungsnummer :
**WO 88/04412 16.06.88 Gazette 88/13**

(54) **DURCHFLUSSMESSGERÄT ZUM MESSEN EINES VOLUMENSTROMES.**

(30) Priorität : **01.12.86 DE 3640980**

(43) Veröffentlichungstag der Anmeldung :
**09.08.89 Patentblatt 89/32**

(45) Bekanntmachung des Hinweises auf die
Patenterteilung :
**15.04.92 Patentblatt 92/16**

(84) Benannte Vertragsstaaten :
**AT BE CH DE FR GB IT LI LU NL SE**

(56) Entgegenhaltungen :
**EP-A- 0 003 563**
**DE-B- 1 295 217**

(56) Entgegenhaltungen :
**DE-C- 353 008**
**DE-C- 926 574**
**FR-A- 1 089 325**
**GB-A- 2 080 574**

(73) Patentinhaber : **MEINZ, Hans Willi**
**Kockerellstrasse 19**
**W-5100 Aachen (DE)**

(72) Erfinder : **MEINZ, Hans Willi**
**Kockerellstrasse 19**
**W-5100 Aachen (DE)**

(74) Vertreter : **König, Werner, Dipl.-Ing.**
**Habsburgerallee 23-25**
**W-5100 Aachen (DE)**

## Beschreibung

Die Erfindung betrifft ein Durchflußmeßgerät zum Messen eines Volumenstromes mit einem als Hubverdrängermaschine ausgebildeten Hydraulikmotor, der keine mechanische Leistung nach außen abgibt und dessen Ausgangsdruck, entsprechend seinen hydromechanischen Verlusten, geringfügig niedriger als der Eingangsdruck ist, wobei der Hydraulikmotor eine rotierende Motorwelle hat, die als Meßwelle ausgebildet ist.

Es ist bekannt, daß herkömmliche Axial- oder Radialkolbenmotoren zur Durchflußmessung eines Volumenstromes Anwendung finden. Nachteilig bei diesen Hydraulikmotoren ist eine relativ hohe Leckstromrate (2 % bis 6 %, bezogen auf den gesamten Schluckstrom). Der obere Wert wird bei niedriger Drehzahl und hohen Drücken, der untere Wert bei hoher Drehzahl und kleinen Drücken erreicht. Für viele Anwendungen, wie etwa bei der Istwerterfassung in elektrohydraulischen Verstärkern oder bei der Durchflußmengenregelung von fließfähigen Mehrkomponentensystemen, insbesondere Polyurethansystemen, ist eine derart hohe Leckstromrate, die die Meßgenauigkeit entsprechend verschlechtert, nicht akzeptabel.

Derartige Durchflußmeßgeräte sind aus den Druckschriften DE-C-926 574, DE-B-1 295 217 und FR-A-1 089 325 bekannt.

Es sind ferner Zahnradmotore bekannt, die keine mechanische Leistung nach außen abgeben und in deren Innenräumen überall im Rahmen ihrer hydromechanischen Verluste der nahezu gleiche Flüssigkeitsdruck herrscht.

Die oben genannten Zahnradmotoren finden als Durchflußmeßgeräte wegen ihrer Einfachheit Anwendung in vielen Bereichen. Ihr Anlaufverhalten ist jedoch schlecht und mit relativ großem Schlupf behaftet. Die Meßgenauigkeit ist aufgrund des inneren Druckausgleichs und der entsprechend niedrigen inneren Leckverluste besser als bei den herkömmlichen Axial- bzw. Radialkolbenmotoren. Es ist jedoch nicht ohne weiteres möglich, eine Meßwelle aus einem solchen Durchflußmeßgerät nach außen zu führen, da das mit der Meßwelle gekoppelte Zahnrad eine große Axialkraft aufnehmen müßte, was die hydromechanischen Verluste vergrößern und die Meßgenauigkeit sowie die Lebensdauer des Gerätes verkleinern würde.

Aus der EP-A-0 003 563 ist ein leckstromfreier Hydraulikmotor bekannt, der zur Istwerterfassung in einem elekrtohydraulischen Verstärker benutzt wird. Dieser Hydraulikmotor ist jedoch ein Linearmotor, so daß er sich nur für begrenzte Volumendurchsätze eignet. Ein kontinuierlicher Volumenstrom ist damit grundsätzlich nicht möglich.

Die Aufgabe der vorliegenden Erfindung besteht nun darin, ein Durchflußmeßgerät zum Messen eines Volumenstroms so auszubilden, daß es auch innerhalb eines elektrohydraulischen Verstärkers eingesetzt werden kann und sowohl eine kontinuierliche als auch eine exakte Durchflußmessung (Meßgenauigkeit < 0,1 %) ermöglicht, wobei die Nachteile der bekannten einschlägigen Durchfiußmeßgeräte vermieden werden.

Diese Aufgabe wird bei einem Durchflußmeßgerät der eingangs erwähnten Art erfindungsgemäß dadurch gelöst, daß der Triebwerksraum des Hydraulikmotors ständig mit dessen Ausgang verbunden ist.

Die bekannten Hubverdrängermotoren weisen gegenüber allen anderen Bauarten die niedrigsten Leckverluste infolge der guten Abdichtung der zylindrischen Passungen auf. Bei den schiebergesteuerten Hydraulikmotoren setzen sich die Leckverluste aus einem inneren und einem äußeren Leckstrom zusammen. Der äußere Leckstrom enthält alle Anteile an Druckflüssigkeit, die von der Druckseite (= Eingang) und von der Rücklaufseite (= Ausgang) her in den Triebwerksraum (= Leckölraum) eindringen. Dies sind z.B. die Flüssigkeitsmengen, die zwischen Kolben und Zylinder, vom hydrostatischen Druckfeld oder auch von der Steuerung aus, in den Leckölraum des Motors eintreten. Da der Lecköldruck üblicherweise nur geringfügig über dem Atmosphärendruck liegt, ist das Druckgefälle beim äußeren Leckstrom, auch wenn der Hydraulikmotor keine mechanische Leistung nach außen abgibt, sehr groß. Die inneren Leckverluste dagegen sind Kurzschlußverluste an der Steuerung, die, ohne Arbeit zu leisten, so+-ort in die Rücklaufleitung abfließen.

Wird ein herkömmlicher Hubverdrängermotor als Durchflußmeßgerät eingesetzt, so liegt der Ausgangsdruck, entsprechend den hydromechanischen Verlusten des Motors, nur noch geringfügig unter dem Eingangsdruck. Damit werden auch die inneren Leckverluste vernachlässigbar klein. Nicht zu vernachlässigen sind dagegen die äußeren Leckströme, die sowohl zwischen Kolben und Zylinder als auch von der Steuerung aus in den Leckölraum des Motors eintreten.

Bei dem erfindungsgemäßen Durchflußmeßgerät dagegen lassen sich auch die äußeren Leckverluste, ähnlich wie bei den vorgenannten inneren Leckagen, auf ein unschädliches Maß reduzieren, indem der Leckölraum (= Triebwerksraum) mit dem Ausgang des Motors verbunden wird, so daß das Druckgefälle des äußeren Leckstroms sich auch im Rahmen der hydromechanischen Verluste des Motors bewegt. Die daraus resultierenden Leckverluste sind ebenfalls vernachlässigbar klein. Weitere technische Vorteile der Erfindung sind eine sehr gute reproduzierbare Meßgenauigkeit (Meßfehler < 0,1 %), sehr großer Meßbereich (etwa 1 : 1000) sowie ein sehr großer Druckbereich (bis etwa 1000 bar). Aufgrund der sehr kleinen Druckdifferenzen zwischen Ein- und Ausgang des Hydraulikmotors ist die Belastung sämtlicher Triebwerksteile sehr gering, was der Lebens-

2

EP 0 326 581 B1

dauer (geringe Reibung), insbesondere bei hohen Drücken und Drehzahlen, zugute kommt. Neben den technischen Vorteilen weist das Durchflußmeßgerät nach der Erfindung den großen Vorteil auf, daß zu seiner Verwirklichung konventionelle Serienmotoren lediglich modifiziert werden müssen. Die wesentlichen Bauteile können aus der Serienfertigung herausgenommen werden, so daß eine wirtschaftliche Fertigung des erfindungsgemäßen Durchflußmeßgerätes möglich ist.

Gemäß einer Weiterbildung der Erfindung kann das Durchflußmeßgerät so ausgebildet sein, daß der Ausgang des Hydraulikmotors durch den Triebwerksraum hindurch nach außen geführt ist. Auf diese Weise wird für eine einwandfreie Abführung der aus Verlustdrehmoment bzw. Verlustleistung im Hydraulikmotor resultierenden Wärme mit der Druckflüssigkeit gesorgt.

Gemäß einer Weiterbildung der Erfindung kann das Durchflußmeßgerät so ausgebildet sien, daß der Hydraulikmotor ein Axial- oder Radialkolbenmotor ist.

Axial- bzw. Radialkolbenmotoren erlauben besonders kompakte Ausführungen, wobei die bekanntesten Bauformen die schiebergesteuerten Maschinen sind. Die Schiebersteuerung ist dabei entweder in den rotierenden Zylinderblock verlegt (Axialkolbenmotor) oder wird mit Drehschiebern bzw. exzenterbetriebenen Längsschiebern ausgeführt (Radialkolbenmotor). Der Radialkolbenmotor läßt eine große Anzahl sternförmig um die Kurbelwelle verteilter Kolben zu, was eine sehr geringe Strompulsation emöglicht (0,1 % beim 21-Kolben-Motor). Da darüber hinaus die meisten Radilkolbenmotoren von Hause aus mit dickwandigen, druckfesten Gehäusen ausgestattet sind, ist diese Bauart für das Durchflußmeßgerät nach der Erfindung besonders geeignet. Aufgrund der extrem kleinen Massenträgheitsmomente ist auch eine gute Eignung für regeltechnische Anwendungen, z.B. innerhalb eines elektrohydraulischen Verstärkers, gegeben, wobei auch große und sehr schnelle Druckschwankungen des zu messenden Volumenstromes für das Durchflußmeßgerät nach der Erfindung völlig unschädlich sind.

Gemäß einer Weiterbildung der Erfindung kann die Meßwelle mechanisch oder magnetisch an einen Meßwertgeber mit elektrischem Ausgang gekoppelt sein, der die Rotationsbewegung der Meßwelle in entsprechende elektrische Ausgangssignale umwandelt.

In Abhängigkeit von dem zu messenden Medium, dem Druck, der Temperatur sowie von dem gewünschten Ausgangssignal kann die Übertragung der Drehwinkelmessung entweder stopfbuchsenlos über eine Permanentmagnetkupplung oder etwa mittels eines Hall-Effekt-Sensors erfolgen. Wird eine direkte Kopplung der Meßwelle mit einem mechanischen Meßwertumformer gewünscht, so ist die Meßwelle zweckmäßigerweise mit einer Gleitringdichtung abzudichten, die auch bei hohen Drücken und Gleitgeschwlndigkeiten nahezu leckagefrei abdichtet. Die dabei entstehenden Axialkräfte können durch entsprechend dimensionierte Kurbelwellenlager abgefangen werden.

Gemäß einer Weiterbildung der Erfindung kann das Durchflußmeßgerät so ausgebildet sein, daß der Hydraulikmotor Bestandteil eines elektrohydraullschen Verstärkers ist, wobei die Meßwelle des Hydraulikmotors mit einem an sich bekannten Kopier-Steuerventil mechanisch gekoppelt ist, welches mit einem elektrischen Steuermotor verbunden ist, und daß der Hydraulikmotor zur kontinuierlichen Istwerterfassung eines vom elektrohydraulischen Verstärker zu messenden und zu regelnden Volumenstromes dient.

Der elektrohydraulische Verstärker, der aus dem Durchflußmeßgerät nach der Erfindung, einem an sich bekannten KopierSteuerventil und einem Steuermotor besteht, dient zum Messen und Regeln eines vorwählbaren Volumenstromes. Dem Steuermotor wird dabei eine vorwählbare rotative Vorgabebewegung (= Sollwert) aufgeprägt, die mit Hilfe des Kopier-Steuerventils, das jegliche nichtsynchrone Bewegung zwischen dem Steuer- und dem Hydraulikmotor mittels eines den Volumenstrom drosselnden Steuerschiebers korrigiert, in eine rotative Ausgangsbewegung des Hydraulikmotors (= Istwert) drehwinkelgetreu kopiert wird und wobei der Schluckstrom des Hydraulikmotors (= gemessener Volumentstrom) in direktem Verhältnis zu der vom Hydraulikmotor erzeugten Drehbewegung steht. Das Durchflußmeßgerät dient hier nicht nur zur kontinuierlichen Istwerterfassung, sondern auch zur dynamischen Korrektur des im Kopier-Steuerventil integrierten hydromechanischen Regelkreises, indem die Meßwelle über eine Spindel-Mutter-Verbindung bei einer Soll-Ist-wert-Differenz den Istwert durch mechanisches Verstellen des im Kopier-Steuerventil befindlichen Steuerschiebers an den Sollwert angleicht. Im Gegensatz zu elektrischen Istwertaufnehmern erfolgen die Istwerterfassung, der Soll-Istwert-Vergleich sowie die Sollwertangleichung gleichzeitig, so daß die bei elektrischen Regelkreisen üblichen Regelschwingungen nicht auftreten, die bei Druck- bzw. Lastschwankungen im System zu einem kurzzeitig über- bzw. untersteuerten Volumenstrom führen.

Gemäß einer Weiterbildung der Erfindung kann das Durch-flußmeßgerät so ausgebildet sein, daß die Gehäuse von Hydraulikmotor und Kopier-Steuerventil dichtend miteinander verbunden sind und daß zur Reduzierung von Leckagen der Triebwerksraum vom Hydraulikmotor mit dem Leckölraum des Kopier-Steuerventils verbunden ist.

Gemäß einer Weiterbildung der Erfindung kann das Durchflußmeßgerät so ausgebildet sein, daß die Gehäuse von Kopier-Steuerventil und Steuermotor dichtend miteinander verbunden sind und daß der Innenraum

3

des Steuermotors mit dem Triebwerksraum des Hydraulikmotors verbunden ist.

Im Unterschied zu bekannten Vorrichtungen verzichten die Ausführungen nach den beiden letzten Weiterbildung auf die üblichen Wellenabdichtungen an der Meßwelle und gegebenenfalls auch, je nach Beschaffenheit des Steuermotors, an der Steuermotorwelle. Wegen der geringen Druckdifferenzen zwischen dem Zu- und Ablauf bleiben die inneren Leckagen in diesem Fall vernachlässigbar klein, da die Lecköiräume von Hydraulikmotor und Kopier-Steuerventil den nahezu gleichen Flüssigkeitsdruck aufweisen. Wird auch der Innenraum des Steuermotors mit dem Triebwerksraum des Hydraulikmotors verbunden, so gilt das oben genannte analog.

Gemäß einer Weiterbildung der Erfindung kann das Durchflußmeßgerät in einem elektrohydraulischen Verstärker zum Messen und Regeln eines vorwählbaren Volumenstromes zum Antrieb für Dosierpumpen bei der Mehrkomponentendosierung von fließfähigen Reaktionskomponenten in eine Mischkammer Anwendung finden.

Die Anwendung des erfindungsgemäßen Durchflußmeßgerätes innerhalb eines elektrohydraulischen Verstärkers bei der Mehrkomponentendosierung von fließfähigen Reaktionskomponenten vermeidet nicht nur die systembedingten Nachteile des ebenfalls zu Dosierzwecken eingesetzten Linearverstärkers, sondern bringt auch zusätzliche funktionelle Vorteile für diesen Anwendungsbereich:

Aufgrund der wesentlich kleineren bewegten Massen des rotierenden Hubkolbenmotors im Vergleich zum Linear-Hydraulikmotor ist die Regelgeschwindigkeit der oben vorgeschlagenen Ausführung entsprechend größer als die des elektrohydraulischen Linearverstärkers. Weiterhin besitzt die Ausführung nach der Erfindung eindeutige Vorteile bei Faltenbalg- und anderen Membran-Dosierpumpen, die nicht eine konstante Vorschubgeschwindigkeit des Verdrängers, sondern einen konstanten Volumenstrom verlangen. Da der elektrohydraulische Verstärker mit dem erfindungsgemäßen Durchflußmeßgerät im Gegensatz zum Linearverstärker keinen Kolbenrückhub benötigt, kann kontinuierlich dosiert werden. Als weiterer Vorteil ist zu nennen, daß bei Einhubdosierpumpen eine größere Rückhubgeschwindigkeit erzielt werden kann, da der Rückhub der Einhubdosierpumpen durch schnellere Antriebe ersetzt werden kann. Der Linearverstärker dagegen kann grundsätzlich nur gleiche Kolbengeschwindigkeiten in beiden Richtungen ausführen, wobei die zulässige Kolbengeschwindigkeit durch die Gewindesteigung einer zweiten Spindel-Mutter-Verbindung, die die rotative Bewegung der Meßwelle in eine translatorische des Linearmotors umsetzt, begrenzt ist. Wählt man ein Feingewinde, das eine hohe Positioniergenauigeit erlaubt, so ist die Kolbengeschwindigkeit entsprechend niedrig, wählt man eine größere Gewindesteigung, die höhere Kolbengeschwindigkeiten ermöglicht, so wird die Positioniergenauigkeit eingeschränkt. Der rotierende Hubkolbenmotor benötigt dagegen eine solche Spindel-Mutter-Verbindung nicht, weil er die rotative Vorgabebewegung des Steuermotors wieder in eine rotative Ausgangsbewegung des Hubkolbenmotors kopiert. Dementsprechend kann er immer, auch bei größten Kolbengeschwindigkeiten, auf höchste Positioniergenauigkeit ausgelegt werden.

Im folgenden Teil der Beschreibung wird ein Ausführungsbeispiel des erfindungsgemäßen Durchflußmeßgerätes sowie ein Ausführungsbeispiel und ein Anwendungsbeispiel eines elektrohydraulischen Verstärkers mit dem Durchflußmeßgerät nach der Erfindung anhand von Zeichnungen dargestellt und im folgenden näher beschrieben.

Es zeigen:

Fig. 1 ein Ausführungsbeispiel des erfindungsgemäßen Durchflußmeßgerätes,
Fig. 2 ein Ausführungsbeispiel des erfindungsgemäßen Durchflußmeßgerätes innerhalb eines elektrohydraulischen Verstärkers,
Fig. 3 ein Anwendungsbeispiel des erfindungsgemäßen Durchflußmeßgerätes innerhab eines elektrohydraulischen Verstärkers im Zweikomponenten-Dosierbereich.

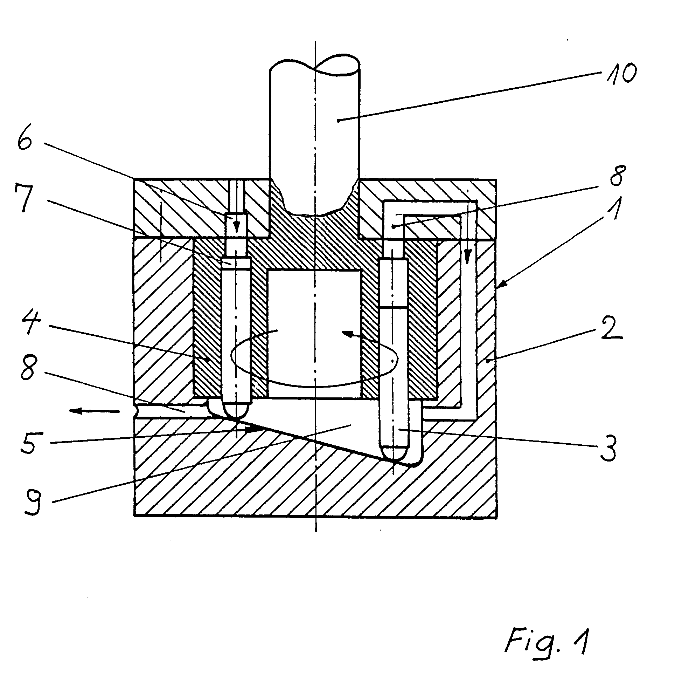

Fig. 1 zeigt ein Ausführungsbeispiel des erfindunggemäßen Durchflußmeßgerätes mit einem Axialkolbenmotor 1, der sich in einem druckfesten Gehäuse 2 befindet. Um einen möglichst pulsationsarmen Volumenstrom zu erhalten, sind mindestens neun Kolben 3 erforderlich, die in einer Zylindertrommel 4 umlaufen. Die Kolben 3 stützen sich dabei auf einer im Gehäuse 2 angebrachten Schräge 5 ab. Die senkrecht zur Achse der Kolben 3 wirkenden Kräfte aller an einem Eingang 6 angeschlossenen Zylinderräume 7 erzeugen an der Zylindertrommel 4 ein Drehmoment, das immer nur so groß wie das durch die hydromechanischen Verluste verursachte Verlustdrehmoment ist. Die aus dem Verlustdrehmoment resultierende Verlustleistung wird in dem Hydraulikmotor 1 in Wärme umgesetzt. Folglich muß für eine einwandfreie Abführung der Wärme mit der Druckflüssigkeit gesorgt werden, was dadurch geschieht, daß der Ausgang 8 des Hydraulikmotors 1 durch den Triebwerksraum 9 hindurch nach außen geführt wird. An der Zglindertrommel 4 ist eine Meßwelle 10 angeschlossen, die bei diesem Ausführungsbeispiel ins Freie führt und über eine Gleitringdichtung (ohne Abb.) zum Gehäuse 2 hin abgedichtet ist.

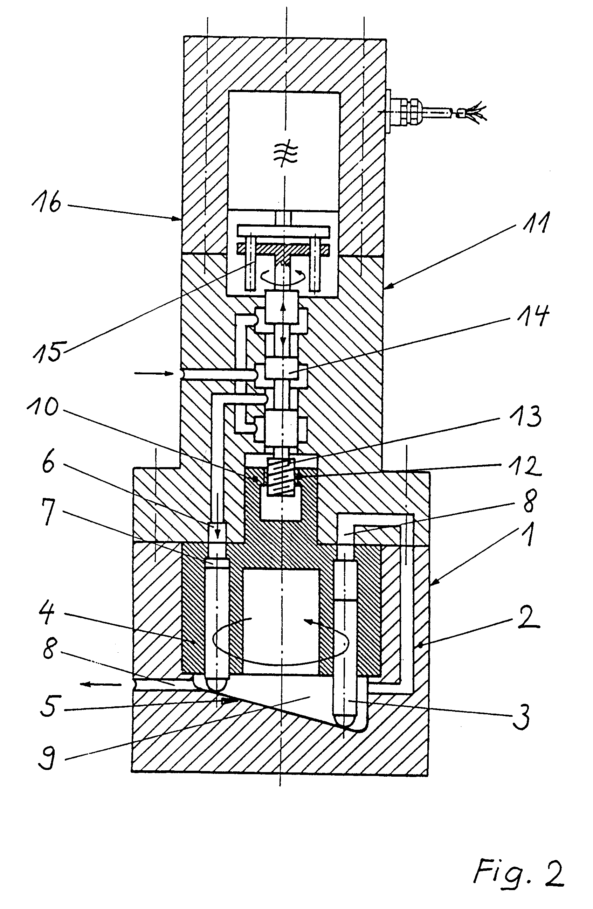

Fig. 2 zeigt ein Ausführungsbeispiel nach der Erfindung als Bestandteil eines elektrohydraulischen Verstärkers. Das in Fig. 1 dargestellte Durchflußmeßgerät ist hier dichtend mit einem Kopier-Steuerventil 11 verbunden, wobei die Meßwelle 10 als Spindelmutter 12 ausgebildet ist, die mit der Spindel 13 zusammenarbeitet. Die Spindel 13 ist dabei fest mit dem Steuerschieber 14 des Kopier-Steuerventils 11 sowie über eine axiale Ausgleichskupplung 15 mit einem Steuermotor 16 verbunden. Wird durch den Steuermotor 16 eine vorgewählte Drehzahl, die einem bestimmten Volumenstrom entspricht, vorgegeben, so schraubt sich beim Start des Steuermotors 16 die Spindel 13 aus der Spindelmutter 12 heraus und bewirkt eine axiale Auslenkung des Steuerschiebers 14, der daraufhin den Eingang 6 zum Hydraulikmotor 1 öffnet. Der dadurch ausgelöste Volumenstrom treibt den Hydraulikmotor solange an, bis die Drehzahl des Hydraulikmotors 1 mit der Drehzahl des Steuermotors 16 übereinstimmt. Übersteigt die Drehzahl des Hydraullkmotors 1 die vorgewählte Drehzahl des Steuermotors 16, so schraubt sich der Steuerschieber 14 des Kopier-Steuerventils 11 wieder in die Mittelstellung und sperrt damit den Eingang 6 zu den Zylinderräumen 7 solange, bis der Steuermotor 16 und die Zylindertrommel 4 wieder mit gleicher Drehzahl rotieren. Der im Eingang 6 eintretende Volumenstrom kann also durch eine vorgewählte Drehzahl des Steuermotors 16, die einem definierten Volumenstrom entspricht, in seiner Größe exakt gemessen und geregelt werden.

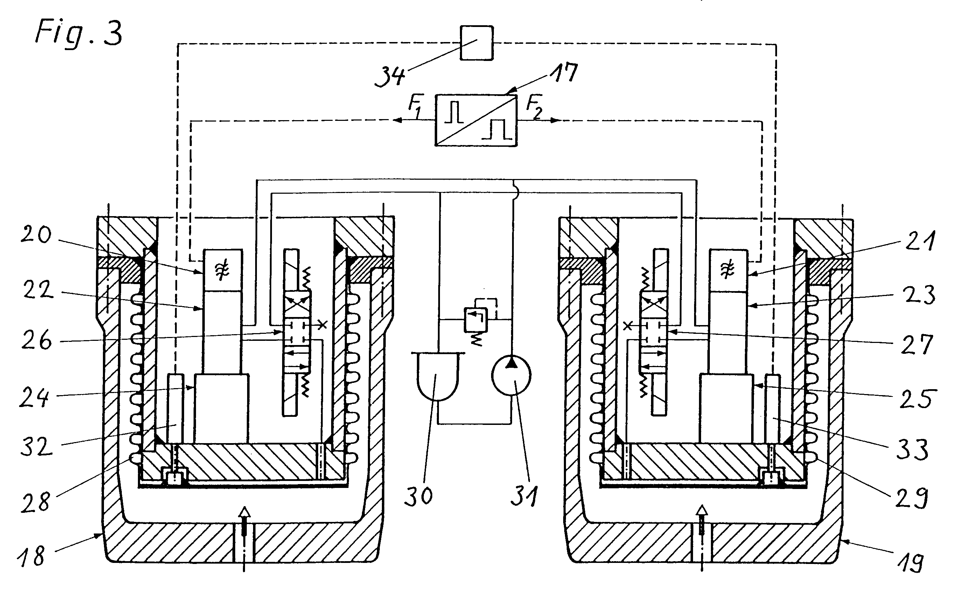

Fig. 3 zeigt ein Anwendungsbeispiel des erfindungsgemäßen Durchflußmeßgerätes innerhalb eines elektrohydraulischen Verstärkers im Zweikomponenten-Dosierbereich, wobei der elekrohydraulische Verstärker zum Messen und Regeln eines vorwählbaren Volumenstromes zum hydraulischen Einzelantrieb für Faltenbalg-Dosierpumpen bei der Zweikomponentendoslerung von fließfähigen Reaktionskomponenten in eine Mischkammer dient. Da solche Faltenbalg-Dosierpumpen sehr große Hubvolumina (50 Liter und mehr) bei kleiner Baugröße und völliger Leckagefreihelt ermöglichen, bietet sich hier zum exakten Messen und Regeln des Volumenstromes der elektrohydraulische Verstärker mit dem erfindungsgemäßen Durchflußmeßgerät besonders an. Mittels einer im Steuerfrequenzgenerator 17 integrierten Impuls-Zähleinrichtung (ohne Abb.) ist der Volumendurchsatz des Volumenstromes (= Dosiermenge der Reaktionskomponenten) vor dem Dosierhub digital mit höchster Genauigkeit einstellbar. Das gewünschte volumetrische Dosierverhältnis der beiden in jeweils einem Dosierzylinder 18, 19 befindlichen Reaktionskomponenten wird im Steuerfrequenzgenerator 17 durch zwei vorgewählte Steuerfrequenzen F1 und F2 digital festgelegt. Diese beiden Frequenzen werden über Verstärker (ohne Abb.) zwei Schrittmotoren 20, 21 zugeteilt, die diese über zwei Kopier-Steuerventile 22, 23 und zwei erfindungsgemäße Axialkolbenmotoren 24, 25 schlupffrei in jeweils einen einzeln gemessenen und geregelten Volumenstrom umsetzen. Die beiden elektrohydraulischen Verstärker, bestehend aus den erfindungsgemäßen Axialkolbenmotoren 24, 25, den Kopier-Steuerventilen 22, 23 und den Schrittmotoren 20, 21 arbeiten ohne Regelschwingungen und sind in ihrem Arbeitsbereich weitgehend gegendruckunabhängig. Nachdem der Dosierhub beendet ist, werden die beiden Schrittmotoren 20, 21 und die damit gekoppelten Axialkolbenmotoren 24, 25 gestoppt. Gleichzeitig schalten zwei 4/3-Wegeventile 26, 27 über ihre Nullstellung in ihre Rücklaufstellung. Daraufhin führen die mit Vordruck beaufschlagten Reaktionskomponenten, die sich jeweils in den beiden Dosierzylindern 18, 19 unterhalb der jeweiligen Faltenbälge 28, 29 befinden, die Faltenbälge 28, 29 in ihre Ausgangsposition zurück, wobei die Hydraulikflüssigkeit, die sich oberhalb der Faltenbälge 28, 29 befindet, über die beiden 4/3-Wegeventile 26, 27 wieder in einen Tank 30 eines Hydraulikaggregats 31 zurückfließt. Damit die Faltenbälge 28, 29 nicht über ihren zulässigen Hub hinausfahren, ist eine Hubendabschaltung erforderlich, die z.B. mit zwei Wegaufnehmern 32, 33 realisiert werden kann. Darüberhinaus dienen die beiden Wegaufnehmer 32, 33 zur zusätzlichen Überwachung des Dosiersystems. Eine Auswerte-Elektronik 34 vergleicht ständig die von den beiden Wegaufnehmern 32, 33 gelieferten Meßwerte mit der vorgewählten Anzahl von Impulsen des Steuerfrequenzgenerators 17 und schaltet bei Überschreiten eines definierten Differenzwertes die Anlage wegen Vorliegen eines technischen Defekts ab.

## Patentansprüche

1. Durchflußmeßgerät zum Messen eines Volumenstromes mit einem als Hubverdrängermaschine ausgebildeten Hydraulikmotor, der keine mechanische Leistung nach außen abgibt und dessen Ausgangsdruck, entsprechend seinen hydromechanischen Verlusten, geringfügig niedriger als der Eingangsdruck ist, wobei der Hydraulikmotor eine rotlerende Motorwelle hat, die als Meßwelle ausgebildet ist , **dadurch gekennzeichnet ,** daß der Triebwerksraum (9) des Hydraulikmotors (1) ständig mit dessen Ausgang (8) verbunden ist.

2. Durchflußmeßgerät nach Anspruch 1, dadurch gekennzelchnet, daß der Ausgang (8) des Hydraulikmotors (1) durch den Triebwerksraum (9) hindurch nach außen geführt ist.

3. Durchflußmeßgerät nach Anspruch 1 oder 2 , dadurch gekennzeichnet, daß der Hydraulikmotor (1) ein Axial- oder Radialkolbenmotor ist.

4. Durchflußmeßgerät nach einem der Ansprüche 1 bis 3, dadurch gekennzeichnet, daß die Meßwelle (10) mechanisch oder magnetisch an einen Meßwertgeber mit elektrischem Ausgang gekoppelt ist, der die Rotationsbewegung der Meßwelle (10) in entsprechende elektrische Ausgangssignale umwandelt.

5. Durchflußmeßgerät nach einem der Ansprüche 1 bis 3, dadurch gekennzeichnet, daß der Hydraulikmotor (1) Bestandteil eines elektrohydraulischen Verstärkers (1,11,16) ist, wobei die Meßwelle (10) des Hydraulikmotors (1) mit einem Kopier-Steuerventil (11) mechanisch gekoppelt ist, welches mit einem elektrischen Steuermotor (16) verbunden ist, und daß der Hydraulikmotor (1) zur kontinuierlichen Istwerterfassung eines vom elektrohydraulischen Verstärker (1,11,16) zu messenden und zu regelnden Volumenstromes dient.

6. Durchflußmeßgerät nach Anspruch 5, dadurch gekennzelchet, daß die Gehäuse von Hydraulikmotor (1) und Kopier-Steuerventil (11) dichtend miteinander verbunden sind und daß zur Reduzierung von Leckagen der Triebwerksraum (9) vom Hydraulikmotor mit dem Leckölraum des Kopier-Steuerventils (11) verbunden ist.

7. Durchflußmeßgerät nach Anspruch 6, dadurch gekennzelchnet, daß die Gehäuse von Kopier-Steuerventil (11) und Steuermotor (16) dichtend miteinander verbunden sind und daß der Innenraum des Steuermotors (16) mit dem Triebwerksraum (9) des Hydraulikmotors (1) verbunden ist.

8. Verwendung eines Durchflußmeßgerätes nach einem der vorhergehenden Ansprüche in einem elektrohydraulischen Verstärker (1,11,16) zum Messen und Regeln eines vorwählbaren Volumenstromes zum Antrieb für Dosierpumpen bei der Mehrkomponentendoslerung von fließfähigen Reaktionskomponenten in eine Mischkammer.


## Claims

1. Flowmeter for the measurement of a volumetric flow with a hydraulic motor being designed as a stroke displacemnet engine which does not produce any external mechanical output and the output pressure of which, in accordance with its hydro-mechanical losses, is slightly lower than the input pressure with the hydraulic motor having a rotating motor shaft being designed as a measuring shaft, characterized in that the drive unit chamber (9) of the hydraulic motor (1) is constantly connected to its outlet (8).

2. Flowmeter in accordance with claim 1, characterized in that the outlet (8) of the hydraulic motor (1) through the drive unit chamber (9) is led outward.

3. Flowmeter in accordance with claim 1 or 2, characterized in that the hydraulic motor (1) is an axial or radial piston motor.

4. Flowmeter in accordance with one of the claims 1 to 3, characterized in that the measuring shaft (10) is coupled mechanically or magnetically with a transmitter with electric output, which converts the rotation movement of the measuring shaft (10) into the corresponding electric output signals.

5. Flowmeter in accordance with one of the claims 1 to 3, characterized in that the hydraulic motor (1) is a component part of an electro-hydraulic amplifier (1,11,16), whereby the measuring shaft (10) of the hydraulic motor (1) is mechanically couplied to a copying control valve (11) which is connected to an electric control motor (16), and that the hydraulic motor (1) performs the continuous determination of the actual value of a volumetric flow tobe measured and regulated by the electro-hydraulic amplifier (1,11,16).

6. Flowmeter in accordance with claim 5, characterized in that the casing of the hydraulic motor (1) and the copying control valve (11) are connected with one another in a sealed manner and that the drive unit chamber (9) of the hydraulic motor is connected with the leakage oil chamber of the copying control valve (11) for the purpose of reducing leakages.

7. Flowmeter in accordance with claim 6, characterized in that the casing of the copying control valve (11) and the control motor (16) are connected with one another in a sealed manner and that the inner chamber of the control motor (16) is connected with the drive unit chamber (9) of the hydraulic motor (1).

8. Use of a flowmeter in accordance with one of the preceding claims in an electro-hydraulic amplifier (1,11,16) for the measurement and regulation of a prespecifiable volumetric flow for the drive of dosing pumps in the multi-component dosing of fluid reaction components into a mixing chamber.


## Revendications

1. Un débitmètre pour mesurer un flux volumétrique équipé d'un moteur hydraulique configuré comme une machine volumétrique, ne transmettant aucune puissance mécanique à l'extérieur, et dont la pression de sortie, compte tenu des pertes hydromécaniques, est légèrement inférieure à la pression d'entrée et dont le moteur hydraulique est doté d'un arbre moteur rotatif transformé en arbre de mesure, caractérisé en ce que la chambre du mécanisme moteur (9) du moteur hydraulique (1) est en liaison constante avec la sortie (8).

2. Débitmètre selon la revendication 1, caractérisé en ce que la sortie (8) du moteur hydraulique (1) est en liaison directe avec l'extérieur par l'intermédiaire de la chambre du mécanisme moteur (9).

3. Débitmètre selon la revendication 1 ou 2, caractérisé en ce que le moteur hydraulique (1) est un moteur à piston radial ou axial.

4. Débitmètre selon les revendications 1 à 3, caractérisé en ce que l'arbre de mesure (10) est couplé mécaniquement ou magnétiquement à un capteur de mesure à sortie électrique qui convertit le mouvement rotatif de l'arbre de mesure (10) en signaux électriques correspondants.

5. Débitmètre selon les revendications 1 à 3, caractérisé en ce que le moteur hydraulique (1) constitue une partie d'un amplificateur électrohydraulique (1,11,16) où l'arbre de mesure (10) du moteur hydraulique (1) est relié mécaniquement à une soupape de copiage et de commande (11), laquelle est reliée à un moteur électrique de commande (16), et en ce que le moteur hydraulique (1) sert à la mesure en continu de la valeur réelle d'un flux volumétrique devant être régulé et mesuré par l'amplificateur électrohydraulique (1,11,16).

6. Débitmètre selon la revendication 5, caractérisé en ce que les enceintes du moteur hydraulique (1) et de la soupape de copiage et de commande (11) sont reliées entre elles de manière étanche et que, pour réduire les fuites, la chambre du mécanisme moteur (9) du moteur hydraulique est reliée au carter d'huile de fuite de la soupape de copiage et de commande (11).

7. Débitmètre selon la revendication 6, caractérisé en ce que les enceintes de la soupape de copiage et de commande (11).et du moteur de commande (16) sont reliées entre elles de manière étanche, et en ce que l'espace intérieur du moteur de commande (16) est relié à la chambre du mécanisme moteur (9) du moteur hydraulique (1).

8. Utilisation d'un débitmètre selon une des revendications ci-dessus dans un amplificateur électrohydraulique (1,11,16) pour mesurer et réguler un flux volumétrique prédéterminé destiné à entraîner des pompes de dosage lors du dosage de composants multiples dans une chambre de mélange pour réactifs liquides.

Fig. 1

Fig. 2

Fig. 3